# EUROPÄISCHE PATENTSCHRIFT

(11) **EP 2 732 744 B1**
(45) Veröffentlichungstag und Bekanntmachung des Hinweises auf die Patenterteilung: **12.11.2014**
(21) Anmeldenummer: 13002176.9
(22) Anmeldetag: 25.04.2013
(51) Int. Cl.: A47J 43/07, B26D 3/11, B26D 3/26, B26B 27/00, B26D 7/06

(54) **Vorrichtung zum spiralförmigen Schneiden von Obst und hartem Gemüse**
Device for spiral-shaped cutting of fruit and hard vegetables
Dispositif de coupe en forme de spirale de fruits et de légumes durs

(30) Priorität: 16.11.2012 DE 202012010996 U
(43) Veröffentlichungstag der Anmeldung: 21.05.2014
(73) Patentinhaber: GEFU-Küchenboss GmbH & Co. KG, 59889 Eslohe (DE)
(72) Erfinder: Schillheim, Rudolf, 59889 Eslohe (DE)
(74) Vertreter: Ostriga Sonnet Wirths & Vorwerk

(56) Entgegenhaltungen:
- EP-A1- 2 158 826
- FR-A- 1 324 653
- FR-A- 1 505 066
- GB-A- 2 114 876
- US-A- 4 602 543
- US-A1- 2008 307 980

## Beschreibung

Die Erfindung betrifft eine Vorrichtung zum spiralförmigen Schneiden von Obst und hartem Gemüse, wie Äpfel, Rettich, Möhren, Rüben, Gurken, mit einer in einem Gehäuse befestigten Schneideinrichtung und einer oberhalb der Schneideinrichtung angeordneten, handbetätigbaren Fixier- und Antriebseinrichtung für das Schneidgut.

Eine derartige Vorrichtung ist aus dem Stand der Technik druckschriftlich nicht nachweisbar, jedoch wird Bezug genommen auf eine als Anlage beigefügte Abbildung einer derartigen Vorrichtung.

Diese an sich vorteilhafte Vorrichtung zum spiralförmigen Schneiden von Obst und hartem Gemüse weist einen Schneidbereich mit einem verstellbaren Julienne-Messer auf, einer darunter lösbar angeordneten Auffangschale sowie einen glockenförmigen Deckel, in dem eine handbetätigbare Fixierung der Antriebseinrichtung angeordnet ist.

Darüber hinaus ist aus der Druckschrift GB 2 114 876 A eine Schneideinrichtung bekannt, bei der das zu schneidende Gut über eine handbetätigte Druckvorrichtung an die drehende Schneidvorrichtung angepresst wird und aus der EP 2 158 826 A1 eine Vorrichtung, bei der mit der Antriebsvorrichtung ebenfalls nicht das Schneidgut, sondern das Schneidmesser über eine Handkurbel rotativ angetrieben wird, während das Schneidgut manuell gegen das rotierende Messer gedrückt wird.

Letztlich ist aus der US-A1-2008/0307980 eine Vorrichtung zum spiralförmigen Schneiden von Obst und hartem Gemüse nach dem Oberbegriff des Anspruchs 1 bekannt,

Bei allen vorbekannten Vorrichtungen ist jedoch auf nachteilige Weise die Nutzbarkeit durch die mangelnde ergonomische Ausbildung eingeschränkt.

Die Aufgabe der Erfindung besteht deshalb darin, eine Vorrichtung zur spiralförmigen Schneiden vom Obst und hartem Gemüse gemäß oben genanntem Stand der Technik so weiterzubilden, dass die Gebrauchsfertigkeit und insbesondere die Ergonomie deutlich verbessert ist.

Die Lösung der Aufgabe ergibt sich aus den Merkmalen des Anspruchs 1, insbesondere den Merkmalen des Kennzeichenteils, wonach der Handgriff des Deckels im Verschluss-/Betriebszustand in eine am Gehäusetopf angeordnete Zentriereinrichtung eintaucht, so dass der am Deckel angeordnete Handgriff im Betriebszustand fest auf dem Gehäusetopf aufsitzt.

Die erfindungsgemäße Vorrichtung weist den wesentlichen ergonomischen Vorteil auf, dass durch den am Deckel angeordneten Handgriff, der im Betriebszustand fest auf dem Gehäusetopf aufsitzt, die Vorrichtung im Betriebszustand mit der einen Hand sehr gut festgehalten werden kann und mit der anderen Hand auf einfache Weise Schneidgut in Rotationen versetzt werden kann. Durch die erfindungsgemäße Ausbildung ist der Gebrauch der Vorrichtung deutlich vereinfacht und die Benutzung des Geräts auch mit wesentlich weniger Kraftaufwand möglich.

Darüber hinaus ergibt sich erfindungsgemäß eine weitere Verbesserung der Kompaktheit der erfindungsgemäßen Vorrichtung dadurch, dass der Handgriff des Deckels im Verschluss-/Betriebszustand in eine am Gehäusetopf angeordnete Zentriereinrichtung eintaucht.

Hierdurch und insbesondere auch durch die zusätzliche Weiterbildung, bei der die am Gehäusetopf angeordnete Zentriereinrichtung halbschalig ausgebildet ist und der am Deckel angeordnete Handgriff im Wesentlichen vollständig davon aufgenommen wird, fügt sich der Deckel im Verschluss-/Betriebszustand harmonisch und nahezu ohne Spiel in die Gesamtvorrichtung ein. Die Stabilität der Gesamtvorrichtung wird dadurch deutlich erhöht.

Zusätzlich ist bei einer weiteren Ausführungsform der Erfindung der Deckel gelenkig am Gehäusetopf angeordnet, wodurch die Stabilität der Vorrichtung, insbesondere im Betriebszustand, vergrößert wird.

Bei einer weiteren vorteilhaften Ausführungsform der Erfindung wird der Gehäusetopf aus einem die Schneidprodukte aufnehmenden Unterteil, einem mit der Schneideinrichtung versehenen Mittelteil und einem den Deckel aufweisendes Oberteil gebildet, wobei das Oberteil und das Mittelteil fest verbunden sind und das Unterteil lösbar daran angeordnet ist. Bei dieser Ausführungsform ist es einerseits vorteilhaft, dass die im Mittelteil befestigte Schneideinrichtung fest am Oberteil angeordnet ist, da dadurch eine stabile Verbindung der Schneideinrichtung mit der Gesamtvorrichtung gewährleistet ist und andererseits, dass das auf einfache Weise die Schneidprodukte aufnehmende Unterteil von der Vorrichtung gelöst werden kann. Die Verbindung kann beispielsweise über einen Bajonettverschluss geschehen.

Letztlich weist eine weitere vorteilhafte Ausführungsform der Erfindung eine Fixier- und Antriebseinrichtung auf, die zum Zwecke der besseren Reinigung am Deckel lösbar angeordnet ist. Bei dieser Ausführungsform ist auf einfache Weise die Antriebsachse für die Fixiervorrichtung, die den Deckel durchgreift, von der Antriebskurbel lösbar, sodass vor dem Einlegen der Vorrichtung, beispielsweise in eine Spülmaschine, eine Demontage erfolgen kann.

Weitere Vorteile der Erfindung ergeben sich aus den nachfolgenden Beschreibungen eines Ausführungsbeispiels. Es zeigen:

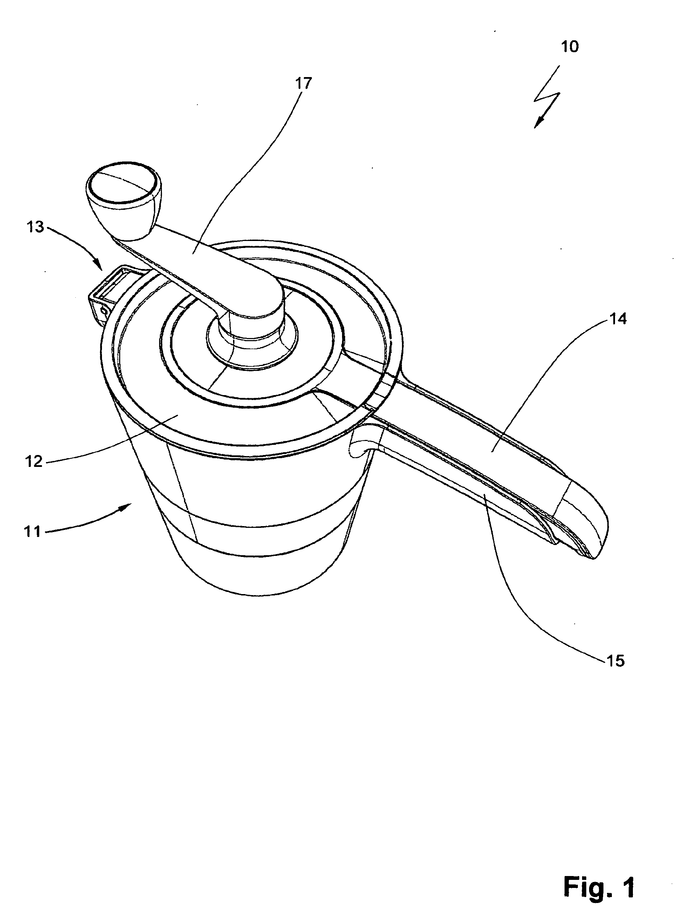

- Figur 1:: eine perspektivische Ansicht einer Vorrichtung zum spiralförmigen Schneiden von Obst und hartem Gemüse,

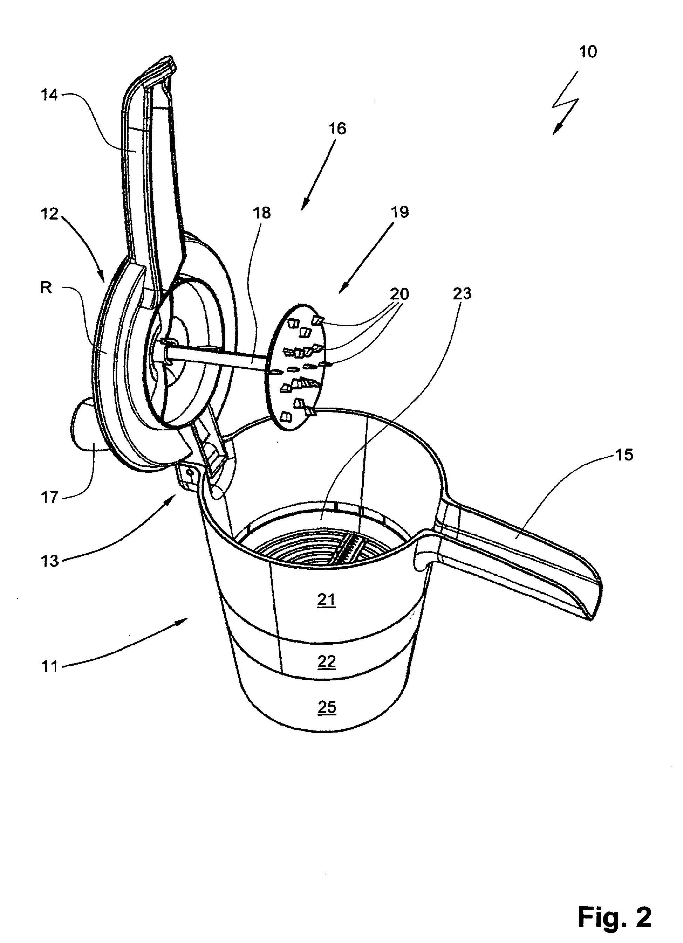

- Figur 2:: eine perspektivische Ansicht der Vorrichtung gemäß Figur 1 in geöffnetem Zustand,

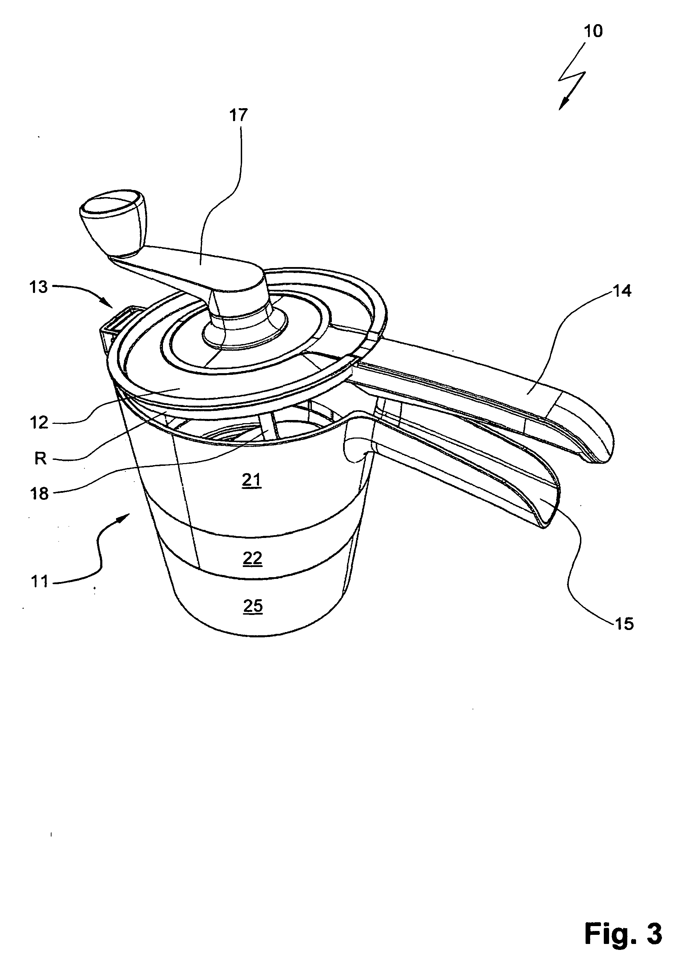

- Figur 3:: eine perspektivische Ansicht der Figur 1 in teilweise geschlossenem Zustand,

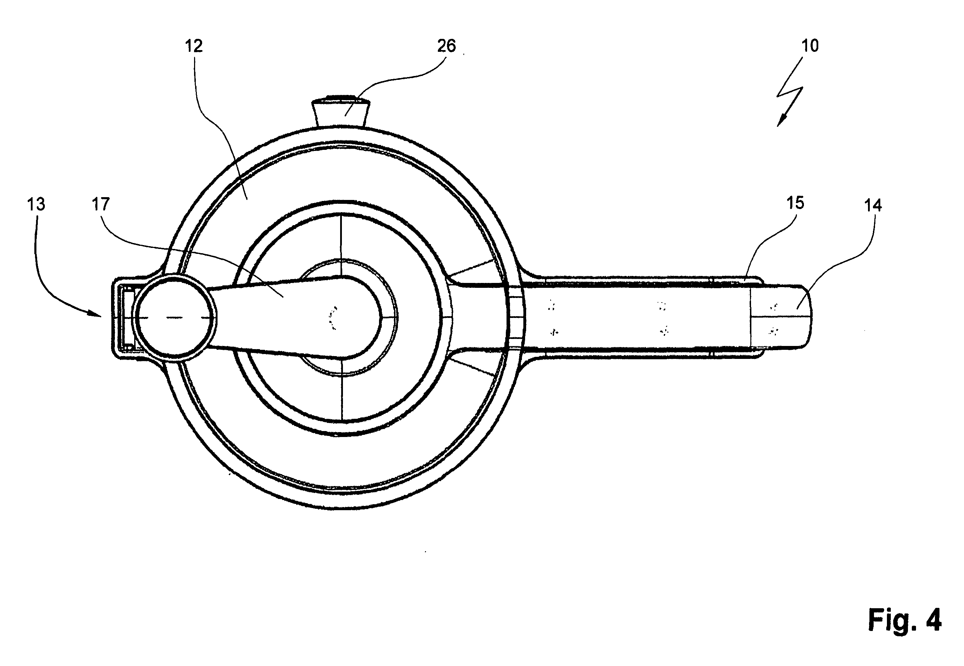

- Figur 4:: eine Draufsicht auf eine Vorrichtung gemäß Figur 1 im geschlossenen Zustand,
- Figur 5:: eine Teilschnittdarstellung einer Vorrichtung gemäß Figur 1 im Bereich der Schneideinrichtung und
- Figur 6:: eine vergrößerte Darstellung der Schneideinrichtung.

In den Zeichnungen ist eine Vorrichtung zum spiralförmigen Schneiden von Obst und hartem Gemüse insgesamt mit der Bezugsziffer 10 bezeichnet.

Eine derartige Vorrichtung weist einen Gehäusetopf 11 mit einem Deckel 12 auf, der über ein Gelenk 13 mit dem Gehäusetopf 11 verbunden ist. Der Deckel 12 ist unterseitig als Steckdeckel ausgebildet und weist eine ringförmige Rippe R aus, mit der der Deckel 12 formschlüssig im Gehäusetop 11 angeordnet ist.

Am Deckel 12 ist ein Handgriff 14 angeordnet, der im Verschluss-/Betriebszustand in eine halbschalig ausgebildete, am Gehäusetopf 11 angeordnete Zentriereinrichtung 15 eintaucht. Dadurch wird der Deckel 12 im Verschluss-/Betriebszustand dem Gelenk 13 gegenüberliegend zusätzlich fixiert.

Im Deckel 12 ist des Weiteren mittig eine handbetätigbare Fixier- und Antriebseinrichtung 16 für das nicht dargestellte Schneidgut angeordnet. Diese Fixier- und Antriebseinrichtung wird aus einer handbetätigbaren Antriebskurbel 17 und einer Antriebsachse 18, die im Deckel gelagert und geführt ist, sowie einer Fixiervorrichtung 19 für das Schneidgut gebildet. Die Fixiervorrichtung 19 weist zahlreiche Vorsprünge 20 auf, die zum Eindringen in das Schneidgut vorgesehen sind und eine Fixierung des Schneidgutes hervorrufen sollen.

Zur einfacheren Reinigung der Vorrichtung ist es möglich, die Fixier- und Antriebseinrichtung 16 vom Deckel 12 dadurch zu trennen, dass die Handkurbel 17 und die Antriebsachse 18 voneinander demontiert werden.

Der Gehäusetopf 11 ist grundsätzlich dreiteilig ausgebildet. Er weist ein Oberteil 21 mit der daran angeordneten halbschaligen Zentriereinrichtung 15 auf, ein Mittelteil 22 mit einer Schneidebene 23, in dem eine Schneideinrichtung 24 angeordnet ist, sowie ein lösbar darunter mittels eines Bajonettverschlusses befestigtes Unterteil 25, in welches das Schneidgut fällt. Das mit der Schneideinrichtung 24 versehene Mittelteil 22 ist fest am Oberteil 21 angeordnet.

Die Schneideinrichtung 24, bei der es sich im vorliegenden Fall um zwei verstellbare Julienne-Messer M₁, M₂ handelt, ist insbesondere in den

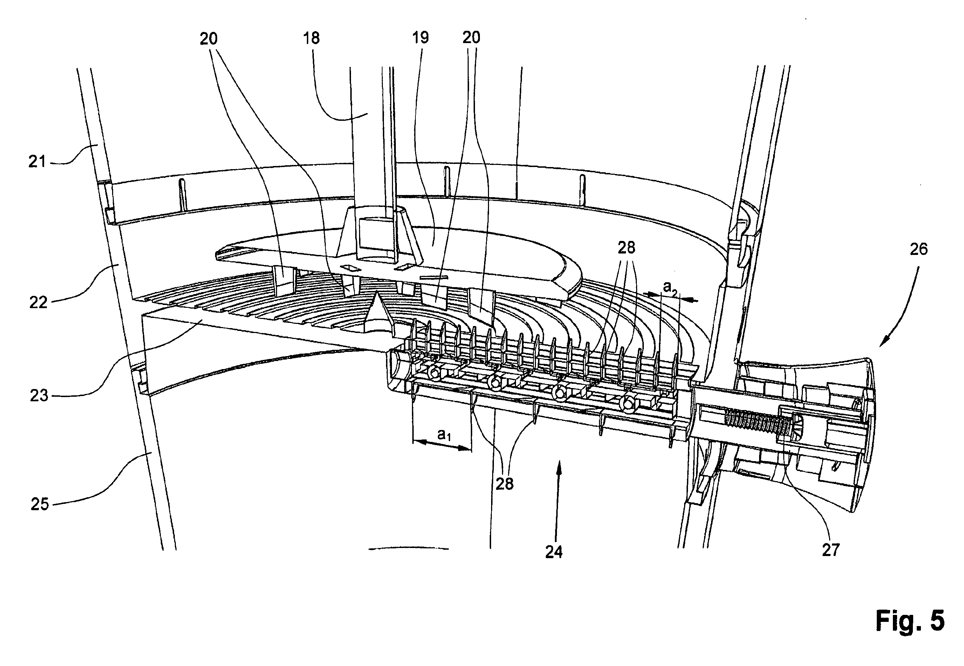

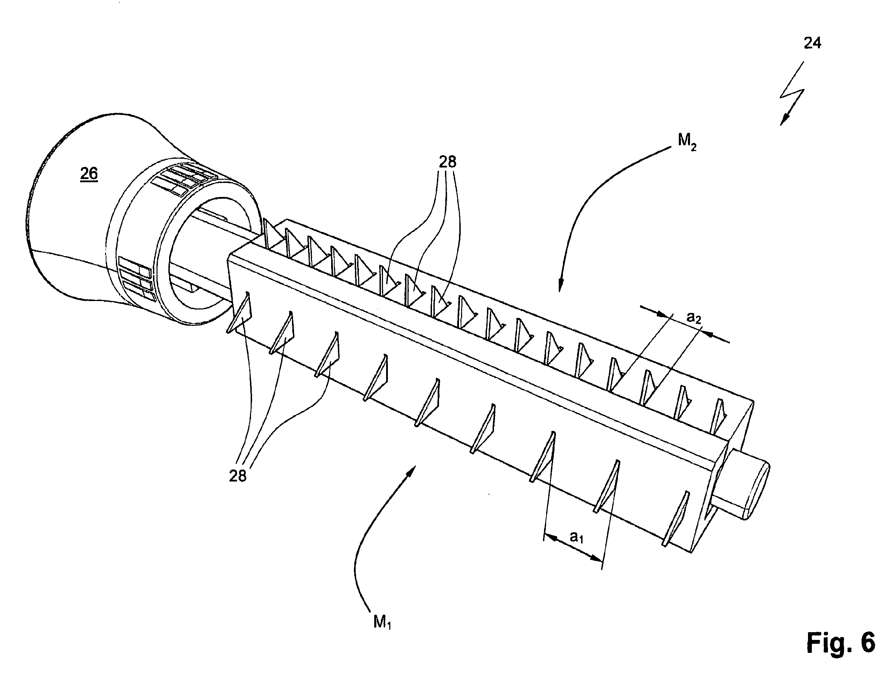

Figuren 5 und 6 dargestellt. Die Schneideinrichtung 24 ist im Bereich der Schneidebene 23 über einen außen am Gehäusetopf 11 angeordneten Drehknopf 26 verstellbar bzw. lösbar über eine Schraube 27 am Mittelteil 22 angeordnet. Der Drehknopf 26 kann - auf nicht dargestellte Weise - mit einer Zug-Drehmechanik versehen sein. Dies bedeutet, dass der Drehknopf 26 entgegen einer Federkraft aus einer verrasteten Stellung gezogen wird und nach einer Drehung um beispielsweise 90° in eine andere Schneidstellung einrastet.

Die Schneideinrichtung 24 weist drei unterschiedliche Julienne-Messer auf, von denen nur die Julienne-Messer M₁, M₂ mit unterschiedlichen Abständen a₁, a₂ zwischen einzelnen Schneidelementen 28 in der Fig. 5 zu erkennen sind. Die Schneidelemente 28 ragen in Richtung des Deckels 12 aus der Schneidebene 23 heraus.

Ein beispielsweise aus Obst oder hartem Gemüse gebildetes, nicht dargestelltes Schneidgut, welches von oben in den Gehäusetopf 11 auf die Schneidebene 23 gelegt wurde, kann beim Schließen des Deckels 12 mittels der Fixiervorsprünge 20 der Fixier- und Antriebseinrichtung 16 zunächst "aufgespießt" werden und dann durch Drehen der Handkurbel 17 in Rotationen versetzt werden. Beim Rotieren des Schneidgutes werden dabei automatisch Julienne-Streifen aus dem Schneidgut herausgeschnitten, die in das Unterteil 25 fallen. Nach dem weitgehenden Zerschneiden des Schneidgutes kann der Schneidgutrest entfernt werden und ein neues Schneidgut eingelegt werden. Zugleich kann jederzeit das Unterteil 25 von der Vorrichtung 10 entfernt und das Schneidgut einer weiteren Verwendung zugeführt werden.

### Bezugszeichen:

- 10: Vorrichtung
- 11: Gehäusetopf
- 12: Deckel
- 13: Gelenk
- 14: Handgriff
- 15: Zentriereinrichtung
- 16: Fixier- und Antriebseinrichtung
- 17: Antriebskurbel
- 18: Antriebsachse
- 19: Fixiervorrichtung
- 20: Fixiervorsprünge
- 21: Oberteil
- 22: Mittelteil
- 23: Schneidebene
- 24: Schneideinrichtung
- 25: Unterteil
- 26: Drehkopf
- 27: Schraube
- 28: Schneidelement

- M₁: Julienne-Messer
- M₂: Julienne-Messer
- a₁: Abstand zu 28
- a₂: Abstand zu 28
- r: ringförmige Rippe an 12

## Patentansprüche

1. Vorrichtung (10) zum spiralförmigen Schneiden von Obst und hartem Gemüse, wie Äpfel, Rettich, Möhren, Rüben, Gurken, mit einer in einem Gehäuse befestigten Schneideinrichtung (24) und einer oberhalb der Schneideinrichtung (24) angeordneten, handbetätigbaren Fixier- und Antriebseinrichtung (16) für das Schneidgut, wobei das Gehäuse (11) topfartig ausgebildet ist und einen darauf angeordneten Deckel (12) aufweist, in dem die Fixier- und Antriebsvorrichtung (16) gelagert ist und dass der Deckel (12) mit einem am Deckelumfang angeordneten Handgriff (14) versehen ist, **dadurch gekennzeichnet, dass** der Handgriff (14) des Deckels (12) im Verschluss-/Betriebszustand in eine am Gehäusetopf (11) angeordnete Zentriereinrichtung (15) eintaucht, so dass der am Deckel (12) angeordnete Handgriff (14) im Betriebszustand fest auf dem Gehäusetopf (11) aufsitzt.

2. Vorrichtung (10) nach Anspruch 1, **dadurch gekennzeichnet, dass** der Deckel (12) gelenkig am Gehäusetopf (11) angeordnet ist.

3. Vorrichtung (10) nach einem der vorangehenden Ansprüche, **dadurch gekennzeichnet, dass** die am Gehäusetopf (11) angeordnete Zentriereinrichtung (15) halbschalig ausgebildet ist und den am Deckel (12) angeordneten Handgriff (14) im Wesentlichen vollständig aufnimmt.

4. Vorrichtung (10) nach einem der vorangehenden Ansprüche, **dadurch gekennzeichnet, dass** der Gehäusetopf (11) aus einem die Schneidprodukte aufnehmenden Unterteil (25), einem mit der Schneideinrichtung (24) versehenen Mittelteil (22) und einem den Deckel (12) aufweisendes Oberteil (21) gebildet wird, wobei das Oberteil (21) und das Mittelteil (22) fest verbunden sind und dass das Unterteil (25) lösbar daran angeordnet ist.

5. Vorrichtung (10) nach einem der vorangehenden Ansprüche, **dadurch gekennzeichnet, dass** die Fixier- und Antriebseinrichtung (16) zum Zwecke der besseren Reinigung am Deckel (12) lösbar angeordnet ist.

6. Vorrichtung (10) nach einem der vorangehenden Ansprüche, **dadurch gekennzeichnet, dass** die Schneideinrichtung (24) aus einer Mehrzahl Julienne-Messer (M₁, M₂) für unterschiedliche Schnittbreiten gebildet wird, welche verstellbar in der Schneidebene (23) angeordnet sind.

## Claims

1. Device (10) for the spiral-shaped cutting of fruit and hard vegetables, such as apples, radishes, carrots, beets and cucumbers, said device having a cutting arrangement (24) which is fastened in a housing, and a fixing and driving arrangement (16) for the material to be cut, which arrangement (16) is arranged above the cutting arrangement (24) and can be operated by hand, wherein the housing (11) is of pot-like construction and has a lid (12) which is arranged thereon and in which the fixing and driving device (16) is mounted, and the lid (12) is provided with a handle (14) which is arranged on the circumference of said lid,
**characterised in that** the handle (14) of the lid (12) is inserted, in the closed/operating state, in a centring arrangement (15) arranged on the housing pot (11), so that the handle (14) arranged on the lid (12) rests on said housing pot (11) in a fixed manner in the operating state.

2. Device (10) according to Claim 1, **characterised in that** the lid (12) is arranged on the housing pot (11) in an articulated manner.

3. Device (10) according to one of the preceding claims, **characterised in that** the centring arrangement (15) arranged on the housing pot (11) is constructed in the manner of a half-shell and accommodates, substantially completely, the handle (14) which is arranged on the lid (12).

4. Device (10) according to one of the preceding claims, **characterised in that** the housing pot (11) is formed from a lower part (25) which receives the products to be cut, a central part (22) which is provided with the cutting arrangement (24), and an upper part (21) having the lid (12), said upper part (21) and said central part (22) being fixedly connected, and that the lower part (25) is detachably arranged thereon.

5. Device (10) according to one of the preceding claims, **characterised in that** the fixing and driving arrangement (16) is detachably arranged on the lid (12) for the purpose of cleaning said arrangement better.

6. Device (10) according to one of the preceding claims, **characterised in that** the cutting arrangement (24) is formed from a plurality of julienne knives (M₁, M₂) for different cutting widths, which knives are arranged in an adjustable manner in the cutting plane (23).

## Revendications

1. Dispositif (10) de coupe en forme de spirale, de fruits et de légumes durs, comme des pommes, radis, carottes, betteraves, concombres, avec un dispositif de coupe (24) fixé dans un boîtier et un dispositif d'entraînement et de fixation (16) actionnable à la main, disposé au-dessus du dispositif de coupe (24), pour le produit à couper, le boîtier (11) étant conçu en forme de pot et présentant un couvercle (12) disposé sur celui-ci, dans lequel le dispositif d'entraînement et de fixation (16) est placé, et le couvercle (12) étant muni d'une poignée (14) disposée sur la périphérie du couvercle, **caractérisé en ce que** la poignée (14) du couvercle (12) pénètre, à l'état de fermeture/de fonctionnement, dans un dispositif de centrage (15) disposé au niveau du pot de boîtier (11), de sorte que la poignée (14) disposée au niveau du couvercle (12) repose, à l'état de fonctionnement, fixement sur le pot de boîtier (11).

2. Dispositif (10) selon la revendication 1, **caractérisé en ce que** le couvercle (12) est disposé articulé au niveau du pot de boîtier (11).

3. Dispositif (10) selon l'une des précédentes revendications, **caractérisé en ce que** le dispositif de centrage (15) disposé au niveau du pot de boîtier (11) est conçu en demi-coque et loge, essentiellement complètement, la poignée (14) disposée au niveau du couvercle (12).

4. Dispositif (10) selon l'une des précédentes revendications, **caractérisé en ce que** le pot de boîtier (11) est formé d'une partie inférieure (25) recevant les produits à couper, d'une partie intermédiaire (22) munie du dispositif de coupe (24) et d'une partie supérieure (21) présentant le couvercle (12), la partie supérieure (21) et la partie intermédiaire (22) étant liées fixement et **en ce que** la partie inférieure (25) y est disposée amovible.

5. Dispositif (10) selon l'une des précédentes revendications, **caractérisé en ce que** le dispositif d'entraînement et de fixation (16) est disposé amovible au niveau du couvercle (12) afin de mieux permettre le nettoyage.

6. Dispositif (10) selon l'une des précédentes revendications, **caractérisé en ce que** le dispositif de coupe (24) est formé d'une multitude de couteaux à julienne (M₁, M₂) pour différentes largeurs de coupe, lesquels sont disposés ajustables dans le plan de coupe (23).
